# EUROPEAN PATENT APPLICATION

(11) **EP 4 410 115 A1**
(43) Date of publication of application: **07.08.2024**
(21) Application number: 22876141.7
(22) Date of filing: 26.09.2022
(51) Int. Cl.: A23L 27/20, A23C 11/10, A23L 2/38, A23L 9/20, A23L 11/60, A23L 11/65

(54) **OIL-IN-WATER TYPE EMULSION**

(30) Priority: 29.09.2021 JP 2021160085
(71) Applicant: ADEKA CORPORATION, Arakawa-ku Tokyo 116-8554 (JP)
(72) Inventor: INOUE, Keita, Tokyo 116-8554 (JP); SHIMADA, Toshihiro, Tokyo 116-8554 (JP)
(74) Representative: Forstmeyer, Dietmar
(86) International application number: PCT/JP2022/035763
(87) International publication number: WO 2023/054274

(57) **Abstract**

The invention provides an oil-in-water emulsion that satisfies all of the following (1), (2), (3), and (4). It is preferable that the following (5) is satisfied. It is also preferable that the oil-in-water emulsion contains a plant-based milk, or contains a plant-derived protein material. (1) The protein content is from 0.1 to 10 mass%. (2) A marine-derived potassium salt is contained. (3) The mass ratio between sodium and potassium (Na:K) is from 1:0.5 to 1:10. (4) The oil component content is from 0.3 to 49 mass%. (5) The non-fat milk solids content is less than 3 mass%.

## Description

### Technical Field

The present invention relates to an oil-in-water emulsion.

### Background Art

Dairy products, such as cow milk and fresh cream, are delicious but expensive, and they also involve issues in terms of stable production and preservability. In view thereof, there are many types of sterilized oil-in-water emulsions distributed on the market, such as whipped cream and concentrated cow milk-like compositions which use edible oils/fats other than butterfat.

To impart a favorable milk flavor to such oil-in-water emulsions as whipped cream and concentrated cow milk-like compositions, such methods as adding milk constituents, such as butterfat, milk protein, etc., are employed.

Unfortunately, the mere use of such methods can only impart milk flavor proportional to the amount of milk constituents added, and particularly regarding milk protein, adding too much may throw the taste off-balance.

Therefore, considerations have been made to add milk flavor enhancers. Concrete examples of milk flavor enhancers that have been proposed include products obtained by bringing corn powder into contact with an oil/fat at a low temperature (see, for example, Patent Literature 1), combinations of specific free amino acids (see, for example, Patent Literature 2), oxidized oils/fats (see, for example, Patent Literature 3), galactooligosaccharides (see, for example, Patent Literature 4), whey minerals (see, for example, Patent Literature 5), etc.

However, in cases where a milk flavor enhancer is used in the aforementioned oil-in-water emulsion, there is little effect in cases where the non-fat milk solids content is small. Further, in the methods of Patent Literatures 1 and 3, off-taste may become too strong due to prolonged storage. Furthermore, in the methods of Patent Literatures 4 and 5, the richness of milk may be insufficient and also sweetness and/or bitterness may be imparted depending on the amount of addition, thus making the milk flavor unnatural.

Further, methods have been proposed (see, for example, Patent Literatures 6 to 8) wherein the balance between sodium and potassium is adjusted to obtain an oil-in-water emulsion having a well-balanced milk flavor and also having a milk flavor causing no awkwardness in terms of taste rate.

Unfortunately, also in these oil-in-water emulsions, there is little effect in cases where the non-fat milk solids content is small. Particularly, the methods of Patent Literatures 6 to 8 have a drawback in that the bitter taste caused by potassium is conspicuous.

Meanwhile, in recent years, there are many situations in which there is a demand for development of food products that do not contain animal allergens, such as milk allergens and egg allergens, as well as food products that can be eaten by vegetarians and vegans.

In view of this objective, it is necessary to impart a favorable milk flavor and a white, clouded appearance like cow milk to an oil-in-water emulsion, such as whipped cream, a concentrated cow milk-like composition, etc., without using any milk constituents whatsoever, such as butterfat, milk protein, etc.

To achieve this, various methods are being conducted, such as using vegetable oil/fat instead of butterfat, using plant-based protein, such as soy protein, instead of milk protein, such as skimmed milk powder, WPC, etc., and using plant-based milk, such as soymilk, coconut milk, etc., instead of cow milk.

However, an oil-in-water emulsion which uses vegetable oils/fats, plant-based milk and plant-based proteins instead of butterfat and milk protein involves problems caused by not containing butterfat or milk protein. In addition, the obtained oil-in-water emulsion suffers from insufficient richness of milk because vegetable oils/fats do not have the richness of butterfat. Further, plant-based proteins and plant-based milk have a strong flavor of the plant itself, and thus, the heavy flavor derived from the plant may be imparted to the obtained oil-in-water emulsion.

It has therefore been very difficult to impart a favorable milk flavor to an oil-in-water emulsion that does not use butterfat or milk protein, and particularly to an oil-in-water emulsion that uses plant-based proteins and plant-based milk.

### Citation List

### Patent Literature

Patent Literature 1: JP 2000-004822A
Patent Literature 2: WO 2009/101972
Patent Literature 3: WO 2014/077019
Patent Literature 4: JP 2014-060987A
Patent Literature 5: JP 2014-050336A
Patent Literature 6: JP 2002-223697A
Patent Literature 7: JP 2003-265102A
Patent Literature 8: JP 2002-223698A

### Summary of Invention

### Technical Problem

Therefore, an objective of the present invention is to provide an oil-in-water emulsion wherein, in cases where the oil-in-water emulsion contains a small amount of milk constituent, such as butterfat, milk protein, etc., and particularly in cases where the oil-in-water emulsion uses a plant-based protein or plant-based milk instead of milk protein, the flavor of the plant-based protein or plant-based milk is suppressed and a favorable milk flavor is offered.

### Solution to Problem

Inventors conducted various studies to achieve the aforementioned objective, and have found that, surprisingly, by using sodium and potassium such that the content ratio therebetween in an oil-in-water emulsion is within a specific range and by using a specific type of salt, it is possible to obtain a favorable milk flavor and to achieve the aforementioned objective, even in cases where, for example, a plant-based protein or plant-based milk is used instead of milk protein and the amount of milk constituents is small.

The present invention provides {1} to {8} below.
{1} An oil-in-water emulsion satisfying all of (1), (2), (3), and (4) below:
   (1) having a protein content of from 0.1 to 10 mass%;
   (2) containing a marine-derived potassium salt;
   (3) having a mass ratio between sodium and potassium (Na:K) of from 1:0.5 to 1:10; and
   (4) having an oil component content of from 0.3 to 49 mass%.
{2} The oil-in-water emulsion as set forth in clause {1}, further satisfying (5) below:
   (5) having a non-fat milk solids content of less than 3 mass%.
{3} The oil-in-water emulsion as set forth in clause {1} or {2}, wherein the oil-in-water emulsion contains a plant-based milk or a plant-derived protein material.
{4} The oil-in-water emulsion as set forth in clause {3}, wherein the oil-in-water emulsion contains a plant-based milk.
{5} The oil-in-water emulsion as set forth in clause {4}, wherein the plant-based milk is derived from oat.
{6} The oil-in-water emulsion as set forth in any one of clauses {1} to {5}, wherein plant-derived protein accounts for 90 mass% or more of proteins in the oil-in-water emulsion.
{7} The oil-in-water emulsion as set forth in any one of clauses {1} to {6}, wherein the oil-in-water emulsion is at least one selected from the group consisting of plant-based milk-containing beverages, coffee whitener, foamable oil-in-water emulsions, alternatives to concentrated milk or concentrated cow milk-like compositions, and alternatives to sweetened condensed milk.
{8} A method for imparting milk flavor to an oil-in-water emulsion or for improving milk flavor of an oil-in-water emulsion,
the method involving:
making the oil-in-water emulsion contain a marine-derived potassium salt such that a mass ratio between sodium and potassium is from 1:0.5 to 1:10.

### Advantageous Effects of Invention

The present invention can provide an oil-in-water emulsion that offers a favorable milk flavor, even in cases where the amount of butterfat and milk protein is small and also in cases where a plant-based protein or plant-based milk is used instead of milk protein.

### Description of Embodiments

An oil-in-water emulsion of the present invention will be described in detail below. In general, "milk flavor" refers to the flavor of cow milk, but in the present Description, "milk flavor" refers to a flavor that is mellow and rich like cow milk.

The protein content in the oil-in-water emulsion of the present invention is from 0.1 to 10 mass%, preferably from 0.3 to 8 mass%, more preferably from 1.0 to 5.0 mass%. If the protein content is less than 0.1 mass%, a favorable milk flavor cannot be obtained even by the present invention. If the content is more than 10 mass%, the texture may become rough during storage, and in addition, the richness of the oil-in-water emulsion may become too strong, and its flavor may become different from that of milk.

It should be noted that, in cases where the oil-in-water emulsion of the present invention is a beverage, it is also preferable that the protein content is 0.15 mass% or more, and may be 4.0 mass% or less, or 3.5 mass% or less.

Examples of proteins may include: animal-derived proteins including, for example, milk proteins, egg proteins, livestock meat proteins, fish proteins, etc.; plant-derived proteins including, for example, proteins derived from nuts such as hazelnuts, almonds, cashew nuts, macadamia nuts, pistachios, coconuts, sesame, walnuts, etc., proteins derived from beans such as soybeans, adzuki (red) beans, green gram, chickpeas, green peas, peanuts, etc., and proteins derived from cereals such as rice, barley, wheat, adlay, oat, etc.; microbe-derived proteins; and food materials containing the aforementioned protein(s). It is also possible to use partially-decomposed products of protein, in which the aforementioned protein has been partially decomposed by methods employing, for example, enzymes, acids, alkalis, heat, etc.

It should be noted that, as will be described below, the oil-in-water emulsion of the present invention contains a marine-derived potassium salt, and the mass ratio between sodium and potassium (Na:K) is from 1:0.5 to 1:10, and in this way, a favorable milk flavor can be offered even without containing milk protein. Considering this point that the oil-in-water emulsion of the present invention can be used for food products that can be eaten by vegetarians and vegans, it is preferable that the present invention does not use any animal-derived proteins, such as milk proteins.

For example, in cases of using a plant-derived protein instead of an animal-derived protein, it is preferable that the plant-derived protein accounts for 90 mass% or more, more preferably 95 mass% or more, particularly preferably 99 mass% or more, of proteins contained in the oil-in-water emulsion. Preferable examples of plant-derived proteins may include proteins in later-described plant-based milk and proteins in later-described plant-derived protein materials.

The oil-in-water emulsion of the present invention contains a marine-derived potassium salt.

The "marine-derived potassium salt" used in the present invention is a type of salt obtained from a solution which mainly contains potassium chloride as a solute and which is obtained by removing salts of magnesium etc. from a crude magnesium chloride solution called bittern, or *nigari,* which mainly consists of magnesium as a result of removal of sodium from seawater to manufacture table salt.

As for the marine-derived potassium salt used in the present invention, it is sufficient to use a salt having a potassium chloride content of 51 mass% or more in solids content, and preferably 70 mass% or more in solids content. It is preferable that the upper limit of the potassium chloride content in the marine-derived potassium salt is 99.7 mass% or less in solids content.

It should be noted that it is preferable that the marine-derived potassium salt used in the present invention has a solids content of 95 mass% or more, more preferably 97 mass% or more. "Solids content" is an amount excluding water/moisture, and can be measured by the Karl-Fischer method or by a drying method by heating under atmospheric pressure.

Using the aforementioned marine-derived potassium salt can obtain a "natural, mellow flavor," as well as "favorable richness and aftertaste." It is thought that, by combining the marine-derived potassium salt with the requirements (1), (3), and (4), it is possible to achieve a cow milk-like flavor equivalent to or close to milk. Examples of the marine-derived potassium salt may include "Ocean Kali" (from FC Chemical Co., Ltd.), "Refined Potassium Chloride" (from Diasalt Corporation), and "Kali Base" (from FC Chemical Co., Ltd.).

It should be noted that, although typical examples of potassium salts used in food products include potassium citrate, monopotassium phosphate, dipotassium phosphate, tripotassium phosphate, potassium oxalate, potassium tripolyphosphate, potassium metaphosphate, potassium pyrophosphate, potassium chloride, potassium nitrate, potassium carbonate, potassium sorbate, etc., these salts are derived from minerals or are industrial chemical products and tend to cause direct bitterness when used in foods and beverages, and can thus not achieve the effects of the present invention.

It is still not clear why there is a difference in how taste is perceived between the marine-derived potassium salt of the present invention and mineral-derived potassium salts and industrial chemical potassium salts. Inventors think that, although detailed reasons are still unknown, industrial chemical products have a too-high purity, whereas mineral-derived potassium salts undergo changes in mineral composition in the course of production of potassium mineral deposits in mines, and thus the same mineral composition as marine-derived potassium salt cannot be obtained even after being refined.

The content of the marine-derived potassium salt in the oil-in-water emulsion is preferably from 0.01 to 5 mass%, more preferably from 0.04 to 1.5 mass%, even more preferably from 0.04 to 0.5 mass%, although the content may differ depending on the type of the oil-in-water emulsion and the intended use thereof.

Further, the oil-in-water emulsion of the present invention has a mass ratio between sodium and potassium (Na:K) of from 1:0.5 to 1:10, preferably from 1:0.8 to 1:6, more preferably from 1:2 to 1:4. By setting the mass ratio within the range of from 1:0.5 to 1:10, it is possible to obtain an oil-in-water emulsion having a favorable milk flavor even without containing milk protein.

Examples of sodium-source blend materials to be contained in the oil-in-water emulsion of the present invention may include sodium salts, such as sodium citrate, disodium phosphate, sodium hexametaphosphate, tetrasodium pyrophosphate, sodium chloride, etc., as well as food products and food additives containing large amounts of sodium. To obtain an oil-in-water emulsion having a favorable flavor, it is preferable to use at least sodium chloride. The sodium content in the oil-in-water emulsion of the present invention is preferably from 0.005 to 0.5 mass%, more preferably from 0.01 to 0.4 mass%, most preferably from 0.02 to 0.2 mass%.

Examples of potassium-source blend materials, other than the aforementioned marine-derived potassium salt, to be contained in the oil-in-water emulsion of the present invention may include organic acid potassium salts such as potassium citrate, tripotassium citrate, etc., potassium salts such as potassium phosphate, potassium chloride, etc., as well as food products and food additives containing large amounts of potassium, such as potassium caseinate, whey minerals, etc.

The potassium content in the oil-in-water emulsion of the present invention is preferably from 0.01 to 2 mass%, more preferably from 0.03 to 1.6 mass%, most preferably from 0.1 to 1 mass%.

In the oil-in-water emulsion of the present invention, the content of potassium derived from the aforementioned marine-derived potassium salt accounts for preferably 50 mass% or more, more preferably 70 mass% or more, of the total potassium content.

Further, as for the amount of potassium-containing components derived from other than plant-based milks, plant-based proteins and marine-derived potassium salt, the potassium content thereof accounts for preferably 30 mass% or less, more preferably 10 mass% or less, of the total potassium content.

The oil/fat content of the oil-in-water emulsion needs to be from 0.3 to 49 mass%. If the content is less than 0.3 mass%, the oil-in-water emulsion will lack richness. If the content is more than 49 mass%, the oil-in-water emulsion will become unstable. It should be noted that the preferable content of oil components varies depending on the intended method of use, and can be set as appropriate in accordance with the oil component content in milk or dairy product which is the target to be replaced.

For example, in cases where the oil-in-water emulsion of the present invention is to be used as an alternative to cow milk (for example, as a cow milk-like beverage described further below), the preferable oil component content is from 0.3 to 10 mass%, more preferably from 1 to 7 mass%.

In cases where the oil-in-water emulsion of the present invention is to be used as an alternative to coffee whitener, the oil component content is preferably from 0.3 to 49 wt%, more preferably from 1 to 48 mass%.

In cases where the oil-in-water emulsion of the present invention is to be used as an alternative to sweetened condensed milk, the oil component content is preferably from 2 to 20 wt%, more preferably from 4 to 12 mass%.

In cases where the oil-in-water emulsion of the present invention is to be used as an alternative to concentrated milk or a concentrated cow milk-like composition, the oil component content can be adjusted to that of the cow milk depending on the degree of concentration thereof. However, in many cases, concentrated milk is basically double- or triple-concentrated, and thus, the oil component content is preferably from 2 to 30 mass%, more preferably from 2 to 21 mass%.

In cases where the oil-in-water emulsion of the present invention is to be used as an alternative to fresh cream or whipped cream, the content is preferably from 10 to 49 mass%, more preferably from 25 to 49 mass%.

It should be noted that the aforementioned oil component content (oil/fat content) is calculated by adding oil components contained in other components described below.

The type of oil/fat to be used in the oil-in-water emulsion is not particularly limited, and examples may include various vegetable oils/fats and animal oils/fats, such as palm oil, palm kernel oil, coconut oil, corn oil, cottonseed oil, soybean oil, rape-seed oil, rice bran oil, sunflower oil, safflower oil, butterfat, tallow, lard, cacao butter, fish oil, whale oil, etc., and processed oils/fats obtained by subjecting the aforementioned oils/fats to one or more treatments selected from hydrogenation, fractionation, and interesterification. In the present invention, one of the aforementioned oils/fats may be used singly, or two or more types may be used in combination.

It should be noted that, as described above, the oil-in-water emulsion of the present invention contains a marine-derived potassium salt and has a sodium-to-potassium ratio of from 1:0.5 to 1:10, and in this way, favorable richness of milk can be offered even without containing butterfat. Considering this point that the oil-in-water emulsion of the present invention can be used for food products that can be eaten by vegetarians and vegans, it is preferable that the present invention does not use butterfat or any other animal-derived oils/fats, including animal oils/fats such as tallow, lard, fish oil, whale oil, etc., as well as processed oils/fats obtained by subjecting animal oils/fats to one or more treatments selected from hydrogenation, fractionation, and interesterification.

It should be noted that, as described above, the oil-in-water emulsion of the present invention contains a marine-derived potassium salt and has a sodium-to-potassium ratio of from 1:0.5 to 1:10, and in this way, favorable richness of milk can be offered even without containing milk protein. Therefore, in the oil-in-water emulsion of the present invention, the non-fat milk solids content is preferably less than 3.0 mass%, more preferably 1.0 mass% or less, even more preferably 0.1 mass% or less, and most preferably, no non-fat milk solids are contained. Note here that "non-fat milk solids" refer to components obtained by removing lipid/fat from milk-derived solids. Herein, "milk-derived" is intended to mean "animal milk-derived". In cases where non-fat milk solids are contained, the lower limit may be 0.01 mass% or more.

It is preferable that the oil-in-water emulsion contains a plant-based milk as an origin of a portion, or the entirety, of the protein described in (1) above.

"Plant-based milk" refers to extract solutions, juice, crushed solutions, or pulverized solutions of nuts, cereals, or beans, and are recently drawing attention as alternatives to cow milk. Plant-based milk is typically in a liquid state at 25°C. An extract solution uses water as a solvent, and can be obtained by: first adding water to nuts, beans, or cereals; mixing and then straining, crushing, or pulverizing the same; and then conducting solid-liquid separation. A crushed solution or a pulverized solution can be obtained by crushing or pulverizing nuts, beans, or cereals, and adding water thereto. In this case, either crushing/pulverizing or addition of water can be conducted first.

Examples of nuts may include peanuts, hazelnuts, almonds, cashew nuts, macadamia nuts, pistachios, coconuts, sesame, walnuts, hempseed, etc. Examples of cereals or beans may include soybeans, adzuki (red) beans, rice, barley, wheat, adlay, rye, oat, buckwheat berries, quinoa seeds, millet, sorghum, chickpeas, green peas, green gram, broad beans, lentils, lupine seeds, kidney beans, chia seeds, sunflower seeds, pumpkin seeds, watermelon seeds, pine nuts, peach fruit, safflower seeds, canola seeds, etc. In the present invention, from the viewpoint of obtaining a favorable milk flavor, it is preferable to use one or two or more types of plant-based milk selected from the group consisting of almonds, rice, soybeans, oat, chickpeas, and green peas, and from the viewpoint of obtaining a more favorable milk flavor, oat is particularly preferable.

It is preferable that the oil component content in the plant-based milk is, for example, from 0.1 to 10 mass%, although not limited thereto. It is preferable that the protein content in the plant-based milk is from 0.1 to 10 mass.

It should be noted that, as for the plant-based milk, it is possible to use a concentrate of the plant-based milk, or a processed solution subjected to an enzyme treatment, microbial fermentation treatment, heating treatment, acid treatment, etc. Herein, "enzyme treatment" encompasses a saccharification treatment using amylase. Commercially available products may also be used.

The oil-in-water emulsion of the present invention may simply be a mixture of a plant-based milk and a marine-derived potassium salt, on the premise that the aforementioned requirements (1) to (4) are satisfied. The plant-based milk content in the oil-in-water emulsion of the present invention can be selected as appropriate within a range from 1 to 99 mass%.

It should be noted that the preferable content of the plant-based milk varies depending on the intended method of use, and can be set as appropriate in accordance with the type of milk or dairy product which is the target to be replaced.

For example, in cases where the oil-in-water emulsion of the present invention is to be used as an alternative to cow milk, the preferable plant-based milk content in the oil-in-water emulsion is from 51 to 99 mass%, more preferably from 80 to 99 mass%.

For example, in cases where the oil-in-water emulsion of the present invention is to be used as an alternative to coffee whitener, the preferable plant-based milk content in the oil-in-water emulsion is from 1 to 90 mass%, more preferably from 2 to 80 mass%.

For example, in cases where the oil-in-water emulsion of the present invention is to be used as an alternative to sweetened condensed milk, the preferable plant-based milk content in the oil-in-water emulsion is from 1 to 60 mass%, more preferably from 2 to 60 mass%.

For example, in cases where the oil-in-water emulsion of the present invention is to be used as an alternative to fresh cream or whipped cream, the preferable plant-based milk content in the oil-in-water emulsion is from 1 to 30 mass%, more preferably from 2 to 20 mass%.

Further, in cases where the oil-in-water emulsion of the present invention is to be used as an alternative to concentrated milk or a concentrated cow milk-like composition, the preferable plant-based milk content in the oil-in-water emulsion is from 1 to 60 mass%, more preferably from 2 to 40 mass%.

Note that it is possible to use a plant-derived protein material as plant-derived protein instead of plant-based milk or in addition to plant-based milk. The "plant-derived protein material" to be used herein preferably has a protein content, in terms of pure protein, of 20 mass% or more, and more preferably a protein content of 50 mass% or more. It is preferable that the plant-derived protein material is in powder form. An example of a plant-derived protein material includes "vegetable protein powder" according to the Japanese Agricultural Standard. For such plant-based proteins, it is preferable to use an isolated protein (for example, soy protein isolate, etc.) obtained by isolating protein from nuts, beans, or cereals. It is preferable to use an isolated protein obtained by isolating protein such that the content in terms of pure protein is 30 mass% or more. For example, isolation can be performed by subjecting soy protein, which has been water-extracted from pressed soybeans, to isoelectric precipitation, and further conducting neutralization and drying as necessary.

The plant-derived protein material can be used in amounts that satisfy the aforementioned protein content, and for example, the usage amount may be preferably from 0.2 to 15 mass%, more preferably from 0.3 to 10 mass%, particularly preferably from 0.5 to 5 mass%, in the oil-in-water emulsion.

Further, in the oil-in-water emulsion of the present invention, the content of water is preferably from 35 to 98 mass%, more preferably from 45 to 95 mass%.

It should be noted that, in cases where the oil-in-water emulsion of the present invention is to be used as an alternative to cow milk, the moisture content is more preferably from 80 to 98 mass%, particularly preferably from 85 to 96 mass%.

In cases where the oil-in-water emulsion of the present invention is to be used as an alternative to coffee whitener, the moisture content is preferably from 50 to 85 wt%, more preferably from 55 to 80 mass%.

In cases where the oil-in-water emulsion of the present invention is to be used as an alternative to sweetened condensed milk, the moisture content is preferably from 10 to 40 wt%, more preferably from 20 to 30 mass%.

In cases where the emulsion is to be used as an alternative to fresh cream or whipped cream, the moisture content is preferably from 35 to 85 mass%, more preferably from 45 to 70 mass%.

In cases of use as an alternative to concentrated milk or a concentrated cow milk-form composition, i.e., as a concentrated cow milk-like composition, the moisture content can be adjusted to that of cow milk depending on the degree of concentration thereof. However, in many cases, concentrated milk is basically double- or triple-concentrated, and thus, the moisture content is preferably from 65 to 95 mass%, more preferably from 75 to 95 mass%.

It should be noted that the content of water/moisture is calculated by adding moisture contained in the aforementioned plant-based milk and plant-derived protein materials, as well as other components described below.

It will suffice if the outermost phase of the oil-in-water emulsion of the present invention is a water phase. Thus, the invention encompasses multiple emulsion systems, such as water-in-oil-in-water emulsions.

The oil-in-water emulsion may contain a sugar.

Examples of the sugar may include refined sugar, granulated sugar, powdered sugar, sucrose, syrup, honey, glucose, fructose, raw sugar, maltose, lactose, cyclodextrin, enzyme-saccharified starch syrup, acid-saccharified starch syrup, saccharified products of reduced starch, reduced starch syrup, polydextrose, reduced lactose, sorbitol, xylitol, maltitol, erythritol, mannitol, high-fructose syrup, sucrose-bonded starch syrup, caramel, maple sugar, oligosaccharide, xylose, trehalose, fructo-oligosaccharide, soybean oligosaccharide, galactooligosaccharide, xylooligosaccharide, arabinose, palatinose oligosaccharide, agarooligosaccharide, chitinoligosaccharide, lactosucrose, hemicellulose, molasses, isomaltooligosaccharide, maltooligosaccharide, coupling sugar, raffinose, lactulose, theande-oligosaccharide, gentio-oligosaccharide, etc.

The oil-in-water emulsion does not have to contain sugar, and the preferable upper limit is preferably 50 mass% or less, more preferably 40 mass% or less, in solids content. In cases where sugar is included, the lower limit may be, for example, preferably 1 mass% or more, more preferably 3 mass% or more, even more preferably 10 mass% or more.

Note, however, that in cases where the oil-in-water emulsion of the present invention is to be used for food products that can be eaten by vegetarians and vegans, it is necessary that the emulsion does not contain sugar originating from animals, particularly lactose and processed sugar thereof originating from dairy products.

The oil-in-water emulsion may contain an emulsifier. Examples of emulsifiers may include glycerol fatty acid esters, sucrose fatty acid esters, propylene glycol fatty acid esters, glycerol organic acid fatty acid esters, polyglycerol fatty acid esters, polyglycerol esters of interesterified ricinoleic acid, calcium stearoyl lactylate, sodium stearoyl lactylate, polyoxyethylene fatty acid esters, polyoxyethylene sorbitan fatty acid esters, lecithin, enzyme-processed lecithin, saponins, etc. One of the above may be used singly, or two or more types may be used in combination.

In cases of including the aforementioned emulsifier(s), from the viewpoint of emulsification stability and flavor, it is preferable that the amount thereof is preferably from 0.01 to 5 mass%, more preferably from 0.1 to 3 mass%, in the oil-in-water emulsion. Note that the "amount of emulsifier" as referred to herein does not include the amount of plant-derived protein materials.

The oil-in-water emulsion may further contain components other than potassium salt, plant-based milk, plant-derived protein materials, oils/fats, water, table salt, sugars, and emulsifiers, in amounts that do not affect the effects of the present invention.

Examples of other components may include food materials and food additives, including starches, cereal flours, thickeners/stabilizers, acidulants such as acetic acid, lactic acid, gluconic acid, etc., sweeteners such as stevia, aspartame, etc., colorants such as β-carotene, caramel, Monascus color, etc., antioxidants such as tocopherol, tea extract, etc., eggs and various egg-processed products, aroma flavorings, milk and dairy products, seasonings, pH adjusters, food preservatives, shelf-life improvers, fruits, fruit juice, coffee, spices, cocoa mass, cocoa powder, cereals, beans, vegetables, meat, seafood, etc.

Such other components can be used discretionarily as long as it does not contradict the purpose of the present invention, but it is preferable that the total amount of such components used in the oil-in-water emulsion of the present invention is preferably within the range of 20 mass% or less, more preferably within the range of 10 mass% or less.

It should be noted that in cases where the oil-in-water emulsion of the present invention is to be used for food products that can be eaten by vegetarians and vegans, it is necessary that the other components described above do not contain materials originating from animals.

Next, a method for producing the aforementioned oil-in-water emulsion will be described.

The oil-in-water emulsion of the present invention can be obtained by mixing water, protein, a marine-derived potassium salt, oil/fat, and other potassium-containing materials and sodium-containing materials as necessary, so as to satisfy the requirements (1) to (4) below, and emulsifying the mixture into an oil-in-water emulsion. Preferably, the oil-in-water emulsion satisfying the requirements (1) to (4) below can be obtained by adding a marine-derived potassium salt, as well as potassium-containing materials and sodium-containing materials as necessary, so as to satisfy the requirements (2) and (3) when producing an oil-in-water emulsion satisfying the requirements (1) and (4).

(1) The protein content is from 0.1 to 10 mass%.
(2) A marine-derived potassium salt is contained.
(3) The mass ratio between sodium and potassium is from 1:0.5 to 1:10.
(4) The oil component content is from 0.3 to 49 mass%.

Preferable production processes in case of the above will be described below.

First, an oil phase is prepared by adding other materials as necessary to oil/fat. On the other hand, a water phase is prepared by adding, to water, a marine-derived potassium salt, as well as plant-based milk, potassium-containing materials, sodium-containing materials, etc., as necessary. Protein is basically added to the water phase, but it may be added to the oil phase.

Next, the water phase is mixed with the oil phase and emulsified into an oil-in-water emulsion. At the time of emulsification, a preliminary emulsion may be prepared first, and then the preliminary emulsion may be homogenized as necessary with a homogenizing device, such as a valve-type homogenizer, a homomixer, a colloid mill, etc., within a pressure range of from 0 to 100 MPa.

If necessary, it is possible to conduct UHT/HTST/low temperature sterilization employing direct heating such as the injection method, infusion method, etc., or indirect heating such as plate-type heating, tubular-type heating, scraping-type heating, etc., or thermal sterilization or thermal pasteurization such as batch-type heating, retort heating, microwave heating, etc., or heating by thermal cooking over an open fire etc. Further, after heating, homogenization may be conducted again as necessary. Further, if necessary, cooling, such as rapid cooling, slow cooling, etc., may be conducted.

It is also possible to employ a method of adding a marine-derived potassium salt, as well as sodium-containing materials as necessary, to cow milk, concentrated milk, concentrated cow milk-like composition, coffee whitener, sweetened condensed milk, whipped cream, fresh cream, or an oil-in-water emulsion which is an alternative composition to the above, so as to satisfy the following requirements (1) to (4).

(1) The protein content is from 0.1 to 10 mass%.
(2) A marine-derived potassium salt is contained.
(3) The mass ratio between sodium and potassium is from 1:0.5 to 1:10.
(4) The oil component content is from 0.3 to 49 mass%.

In this case, the marine-derived potassium salt may be added in a powder state, but it is preferable to employ a method of preparing, in advance, an aqueous solution containing the marine-derived potassium salt as a concentrated milk flavor-imparting solution, and adding the same in accordance with the potassium and sodium content of the oil-in-water emulsion, from the viewpoint of facilitating mixing without greatly changing the content ratio of the other components.

The oil-in-water emulsion of the present invention can be consumed directly as-is as a beverage or a food product, or may be used as-is as an alternative to cow milk, concentrated milk, a concentrated cow milk-like composition, coffee whitener, sweetened condensed milk, whipped cream, or fresh cream. Also, the present oil-in-water emulsion can be used in various food products as an alternative composition to cow milk, an alternative composition to cheese, or an alternative composition to cream, and can be used, for example, as cream such as custard cream, white cream, etc., stews and gratins using such cream, desserts such as Bavarian cream, etc., frozen desserts such as ice cream, etc., pastes such as flour-based pastes, etc., mayonnaise and other dressings, cheese-like food products, materials to be kneaded into processed food products, such as bread, confectionery, ham, sausages, etc., filling materials, topping materials, spreads, etc. If necessary, the oil-in-water emulsion of the present invention may be stored in a refrigerated or frozen state.

Next, a method for imparting milk flavor to, or improving milk flavor of, the oil-in-water emulsion of the present invention will be described.

A method for imparting milk flavor to, or improving milk flavor of, the oil-in-water emulsion of the present invention is characterized by adding a marine-derived potassium salt such that the mass ratio between sodium and potassium becomes from 1:0.5 to 1:10.

In the case of an oil-in-water emulsion containing small amounts of milk constituents such as butterfat, milk protein, etc., and particularly an oil-in-water emulsion wherein a plant-based protein or plant-based milk is used instead of milk protein, by adding a marine-derived potassium salt such that the mass ratio between sodium and potassium (Na:K) is from 1:0.5 to 1:10, the flavor of plant-based protein or plant-based milk can suppressed and an oil-in-water emulsion offering a favorable milk flavor can be obtained.

It should be noted that concrete amounts of addition and methods for addition are as described above.

### Examples

The present invention is described in further detail below by way of Examples and Comparative Examples. These examples, however, do not limit the present invention whatsoever.

### {Example 1}

80.26 parts by mass of water was heated up to 60°C, and while stirring, a water phase was prepared by dissolving 0.3 parts by mass of sugar ester ("S-1670" from Mitsubishi-Chemical Foods Corporation), 0.08 parts by mass of table salt (protein content: 0 mass%; potassium content: 0 mass%; sodium content: 39.3 mass%), 0.26 parts by mass of a marine-derived potassium salt ("Ocean Kali" from FC Chemical Co., Ltd.; solids content: 99.9 mass%; protein content: 0 mass%; potassium content: 52.2 mass%; sodium content: 0 mass%), 1.8 parts by mass of a plant-derived protein material (soy protein isolate "Fujipro F" from Fuji Oil Co., Ltd.; protein content: 85.8 mass%; potassium content: 0.2 mass%; sodium content: 1.2 mass%), and 9.2 parts by mass of reduced starch syrup (solids content: 70 mass%). On the other hand, an oil phase was prepared by dissolving 8 parts by mass of palm kernel oil and 0.1 parts by mass of soybean lecithin. The oil phase was added to the water phase and was mixed and stirred, to prepare a preliminary emulsion. After preliminary emulsification, the preliminary emulsion was homogenized under a pressure of 5 MPa, then sterilized with a VTIS sterilizer (UHT sterilizer from Alfa Laval) at 142°C for 4 seconds, again homogenized under a pressure of 8 MPa, and then cooled to 5°C. Thereafter, aging was conducted in a refrigerator for 24 hours, to obtain Oil-in-water emulsion 1 which was a concentrated cow milk-like composition.

For the obtained Oil-in-water emulsion 1, (1) the protein content, (2) the marine-derived potassium salt content, (3) the mass ratio between sodium and potassium, (4) the oil component content, and (5) the non-fat milk solids content are shown in Table 1.

### {Example 2}

The table salt used in Example 1 was not added, and instead of 0.26 parts by mass of the marine-derived potassium salt ("Ocean Kali"), 0.36 parts by mass of a marine-derived potassium salt ("Kali Base" from FC Chemical Co., Ltd.; solids content: 99.9 mass%; protein content: 0 mass%; potassium content: 37.8 mass%; sodium content: 7.9 mass%) was used. Further, the water blending amount was changed from 80.26 parts by mass to 80.16 parts by mass. Other than the above, Oil-in-water emulsion 2, which was a concentrated cow milk-like composition, was obtained according to the blend and production method of Example 1.

For the obtained Oil-in-water emulsion 2, (1) the protein content, (2) the marine-derived potassium salt content, (3) the mass ratio between sodium and potassium, (4) the oil component content, and (5) the non-fat milk solids content are shown in Table 1.

### {Comparative Example 1}

Instead of the marine-derived potassium salt ("Ocean Kali") used in Example 1, potassium chloride (mineral-derived "Sylvine" from Organo Foodtech Corporation; protein content: 0 mass%; potassium content: 52.0 mass%; sodium content: 0 mass%) was used. Other than the above, Oil-in-water emulsion 3, which was a concentrated cow milk-like composition, was obtained according to the blend and production method of Example 1.

For the obtained Oil-in-water emulsion 3, (1) the protein content, (2) the marine-derived potassium salt content, (3) the mass ratio between sodium and potassium, (4) the oil component content, and (5) the non-fat milk solids content are shown in Table 1.

**[Table 1]**

| **Concentrated cow milk-like composition** | | | |
|---|---|---|---|
| | Example 1 | Example 2 | Comparative Example 1 |
| Oil-in-water emulsion | 1 | 2 | 3 |
| (1) Protein content (mass%) | 1.54 | 1.54 | 1.54 |
| (2) Marine-derived potassium salt content (mass%) | 0.26 | 0.36 | 0 |
| (3) Mass ratio between sodium and potassium (K/Na) | 2.6 | 2.8 | 2.6 |
| (4) Oil component content (mass%) | 8 | 8 | 8 |
| (5) Non-fat milk solids (mass%) | 0 | 0 | 0 |
| Potassium content (mass%) | 0.139 | 0.140 | 0.139 |

Each of the Oil-in-water emulsions 1 to 3, which were the obtained concentrated cow milk-like compositions, was diluted two-fold with water, and ten expert panelists evaluated the flavor. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 2. In cases where comments were made during the evaluation, comments that were raised a plurality of times are also shown in Table 2.

**[Table 2]**

| **Concentrated cow milk-like composition** | | | |
|---|---|---|---|
| | Example 1 | Example 2 | Comparative Example 1 |
| Oil-in-water emulsion | 1 | 2 | 3 |
| Flavor evaluation | 4.8 | 4.6 | 2.2 |
| Flavor evaluation (comments) | Lingering flavor like milk | Mellow milk flavor | Sharp salty taste; acrid |

Table 3 shows that the concentrated cow milk-like compositions of the respective Examples, which satisfied (1) to (4), were able to offer a flavor close to that of milk, compared to Comparative Example 1 using a mineral-derived potassium salt instead of a marine-derived potassium salt.

### {Examples 3 to 7, and Comparative Examples 2 to 4}

The table salt content, marine-derived potassium salt content, and water blending amount in Example 1 were varied according to the respective blends shown in Table 3 below, to obtain Oil-in-water emulsions 4 to 11, which were concentrated cow milk-like compositions of Examples 3 to 7 and Comparative Examples 2 to 4.

For each of the obtained Oil-in-water emulsions 4 to 11, (1) the protein content, (2) the marine-derived potassium salt content, (3) the mass ratio between sodium and potassium, (4) the oil component content, and (5) the non-fat milk solids content are shown in Table 4.

**[Table 3]**

| (Parts by mass) | Example 3 | Example 4 | Example 5 | Example 6 | Example 7 | Comparative Example 2 | Comparative Example 3 | Comparative Example 4 |
|---|---|---|---|---|---|---|---|---|
| Oil-in-water emulsion | 4 | 5 | 6 | 7 | 8 | 9 | 10 | 11 |
| Table salt | 0.08 | 0.08 | 0.08 | 0.01 | 0 | 0 | 0.08 | 0 |
| "Ocean Kali" | 0.05 | 0.1 | 0.4 | 0.3 | 0.4 | 0 | 0.03 | 0.5 |
| Water | 80.47 | 80.42 | 80.12 | 80.29 | 80.2 | 80.6 | 80.49 | 80.1 |

**[Table 4]**

| **Concentrated cow milk-like compos tion** | | | | | | | | |
|---|---|---|---|---|---|---|---|---|
| | Example 3 | Example 4 | Example 5 | Example 6 | Example 7 | Comparative Example 2 | Comparative Example 3 | Comparative Example 4 |
| Oil-in-water emulsion | 4 | 5 | 6 | 7 | 8 | 9 | 10 | 11 |
| (1) Protein content (mass%) | 1.54 | 1.54 | 1.54 | 1.54 | 1.54 | 1.54 | 1.54 | 1.54 |
| (2) Marine-derived potassium salt content (mass%) | 0.05 | 0.1 | 0.4 | 0.3 | 0.4 | 0 | 0.03 | 0.5 |
| (3) Mass ratio between sodium and potassium (K/Na) | 0.56 | 1.05 | 4 | 6.28 | 9.83 | 0.17 | 0.36 | 12.25 |
| (4) Oil component content (mass%) | 8 | 8 | 8 | 8 | 8 | 8 | 8 | 8 |
| (5) Non-fat milk solids (mass%) | 0 | 0 | 0 | 0 | 0 | 0 | 0 | 0 |
| Potassium content (mass%) | 0.030 | 0.056 | 0.212 | 0.160 | 0.212 | 0.004 | 0.019 | 0.265 |

Each of the Oil-in-water emulsions 4 to 11, which were the obtained concentrated cow milk-like compositions, was diluted two-fold with water, and ten expert panelists evaluated the flavor. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 5. In cases where comments were made during the evaluation, comments that were raised a plurality of times are also shown in Table 5.

**[Table 5]**

| **Concentrated cow milk-like composition** | | | | | | | | |
|---|---|---|---|---|---|---|---|---|
| | Example 3 | Example 4 | Example 5 | Example 16 | Example 7 | Comparative Example 2 | Comparative Example 3 | Comparative Example 4 |
| Oil-in-water emulsion | 4 | 5 | 6 | 7 | 8 | 9 | 10 | 11 |
| Flavor evaluation | 3.1 | 4 | 4.3 | 3.3 | 3 | 1.9 | 2.3 | 1.8 |
| Flavor evaluation (comments) | Weak mellownes s | Mellow milk flavor | Mellow milk flavor | Rather strong salty taste | Rather strong salty taste | Watery taste; soy smell | Watery taste; soy smell | Too-strong salty taste |

As shown in Table 5, Comparative Examples 2 and 3, wherein Na:K was 1 to less than 0.5, had a watery taste, soy smell, and weak milk flavor. Comparative Example 4, wherein Na:K was 1 to greater than 10, had a too-strong salty taste. In contrast, the concentrated cow milk-like compositions of the respective Examples, which satisfied (1) to (4), were able to offer a favorable milk flavor.

### {Examples 8 to 10, and Comparative Examples 5 and 6}

### {Preparation of Concentrated Milk-Flavor Liquid A}

To 40.70 parts by mass of water, 2.3 parts by mass of a marine-derived potassium salt ("Ocean Kali" from FC Chemical Co., Ltd.; protein content: 0 mass%; potassium content: 52.2 mass%; sodium content: 0 mass%) and 57.0 parts by mass of reduced starch syrup (solids content: 70 mass%) were dissolved, to obtain Concentrated milk-flavor liquid A.

### {Preparation of Concentrated Milk-Flavor Liquid B }

To 39.94 parts by mass of water, 3.06 parts by mass of a marine-derived potassium salt ("Kali Base" from FC Chemical Co., Ltd.; protein content: 0 mass%; potassium content: 37.8 mass%; sodium content: 7.9 mass%) and 57.0 parts by mass of reduced starch syrup (solids content: 70 mass%) were dissolved, to obtain Concentrated milk-flavor liquid B.

### {Preparation of Concentrated Milk-Flavor Liquid C}

To 43.0 parts by mass of water, 57.0 parts by mass of reduced starch syrup (solids content: 70 mass%) was dissolved, to obtain Concentrated milk-flavor liquid C.

Almond milk ("Almond Breeze" (non sugar) from Pokka Sapporo Food & Beverage Ltd.; oil component content: 1.2 mass%; protein content: 0.6 mass%; potassium content: 0.052 mass%; sodium content: 0.071 mass%; moisture content: 94 mass%) and the aforementioned Concentrated milk-flavor liquids A to C were mixed according to the ratio shown in Table 6 below, to obtain Oil-in-water emulsions 12 to 16 which were cow milk-like beverages.

For each of the obtained Oil-in-water emulsions 12 to 16, (1) the protein content, (2) the marine-derived potassium salt content, (3) the mass ratio between sodium and potassium, (4) the oil component content, and (5) the non-fat milk solids content are shown in Table 7.

**[Table 6]**

| (Parts by mass) | Example 8 | Example 9 | Example 10 | Comparative Example 5 | Comparative Example 6 |
|---|---|---|---|---|---|
| Oil-in-water emulsion | 12 | 13 | 14 | 15 | 16 |
| Almond milk | 95 | 98 | 96 | 92 | 100 |
| Concentrated milk-flavor liquid A | 5 | 2 | 0 | 0 | 0 |
| Concentrated milk-flavor liquid B | 0 | 0 | 4 | 0 | 0 |
| Concentrated milk-flavor liquid C | 0 | 0 | 0 | 8 | 0 |

**[Table 7]**

| **Cow milk-like beverage** | | | | | |
|---|---|---|---|---|---|
| | Example 8 | Example 9 | Example 10 | Comparative Example 5 | Comparative Example 6 |
| Oil-in-water emulsion | 12 | 13 | 14 | 15 | 16 |
| (1) Protein content (mass%) | 0.57 | 0.59 | 0.58 | 0.57 | 0.6 |
| (2) Marine-derived potassium salt content (mass%) | 0.115 | 0.046 | 0.122 | 0 | 0 |
| (3) Mass ratio between sodium and potassium (KINa) | 1.62 | 1.08 | 1.24 | 0.73 | 0.73 |
| (4) Oil component content (mass%) | 1.14 | 1.18 | 1.15 | 1.14 | 1.2 |
| (5) Non-fat milk solids (mass%) | 0 | 0 | 0 | 0 | 0 |
| Potassium content (mass%) | 0.109 | 0.075 | 0.096 | 0.048 | 0.052 |

Ten expert panelists evaluated the flavor of each of the obtained Oil-in-water emulsions 12 to 16, which were cow milk-like beverages. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 8. In cases where comments were made during the evaluation, comments that were raised a plurality of times are also shown in Table 8.

**[Table 8]**

| **Cow milk-like beverage** | | | | | |
|---|---|---|---|---|---|
| | Example 8 | Example 9 | Example 10 | Comparative Example 5 | Comparative Example 6 |
| Oil-in-water emulsion | 12 | 13 | 14 | 15 | 16 |
| Flavor evaluation | 4.4 | 4.1 | 3.6 | 2.1 | 1.8 |
| Flavor evaluation (comments) | Sweetness close to milk | Richness of milk | Rich although weak | Too-strong sweetness | Watery; flavor different from milk |

As shown in Table 8, the cow milk-like beverages of the respective Examples, which satisfied (1) to (4), scored 3.6 points or higher in flavor evaluation and were able to offer a favorable milk flavor. In contrast, Comparative Examples 5 and 6, which did not use a marine-derived potassium salt, had a weak milk flavor or a flavor different in nature from milk.

### {Examples 11 to 13, and Comparative Examples 7 and 8}

### {Preparation of Potassium Chloride Solution A}

To 97.7 parts by mass of water, 2.3 parts by mass of a marine-derived potassium salt ("Ocean Kali" from FC Chemical Co., Ltd.; protein content: 0 mass%; potassium content: 52.2 mass%; sodium content: 0 mass%) was dissolved, to obtain Potassium chloride solution A.

### {Preparation of Potassium Chloride Solution B}

To 96.94 parts by mass of water, 3.06 parts by mass of a marine-derived potassium salt ("Kali Base" from FC Chemical Co., Ltd.; protein content: 0 mass%; potassium content: 37.8 mass%; sodium content: 7.9 mass%) was dissolved, to obtain Potassium chloride solution B.

A plant-based milk ("Macadamia Milk" (no sugar) from Kikkoman Beverage Company; oil component content: 2.6 mass%; protein content: 0.3 mass%; potassium content: 0.011 mass%; sodium content: 0.055 mass%; moisture content: 89 mass%), the aforementioned Potassium chloride solutions A, B, and water were mixed according to the ratio shown in Table 9 below, to obtain Oil-in-water emulsions 17 to 21 which were cow milk-like beverages.

For each of the obtained Oil-in-water emulsions 17 to 21, (1) the protein content, (2) the marine-derived potassium salt content, (3) the mass ratio between sodium and potassium, (4) the oil component content, and (5) the non-fat milk solids content are shown in Table 10.

**[Table 9]**

| (Parts by mass) | Example 11 | Example 12 | Example 13 | Comparative Example 7 | Comparative Example 8 |
|---|---|---|---|---|---|
| Oil-in-water emulsion | 17 | 18 | 19 | 20 | 21 |
| Macadamia milk | 94 | 97.5 | 92 | 92 | 100 |
| Potassium chloride solution A | 6 | 2.5 | 0 | 0 | 0 |
| Potassium chloride solution B | 0 | 0 | 8 | 0 | 0 |
| Water | 0 | 0 | 0 | 8 | 0 |

**[Table 10]**

| **Cow milk-like beverage** | | | | | |
|---|---|---|---|---|---|
| | Example 11 | Example 12 | Example 13 | Comparative Example 7 | Comparative Example 8 |
| Oil-in-water emulsion | 17 | 18 | 19 | 20 | 21 |
| (1) Protein content (mass%) | 0.28 | 0.29 | 0.28 | 0.28 | 0.3 |
| (2) Marine-derived potassium salt content | 0.138 | 0.0575 | 0.2448 | 0 | 0 |
| (3) Mass ratio between sodium and potassium | 1.6 | 0.8 | 1.5 | 0.2 | 0.2 |
| (4) Oil component content (mass%) | 2.44 | 2.54 | 2.39 | 2.39 | 2.6 |
| (5) Non-fat milk solids (mass%) | 0 | 0 | 0 | 0 | 0 |
| Potassium content (mass%) | 0.082 | 0.041 | 0.103 | 0.010 | 0.011 |

Ten expert panelists evaluated the flavor of each of the obtained Oil-in-water emulsions 17 to 21, which were cow milk-like beverages. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 11. In cases where comments were made during the evaluation, comments that were raised a plurality of times are also shown in Table 11.

**[Table 11]**

| **Cow milk-like beverage** | | | | | |
|---|---|---|---|---|---|
| | Example 11 | Example 12 | Example 13 | Comparative Example 7 | Comparative Example 8 |
| Oil-in-water emulsion | 17 | 18 | 19 | 20 | 21 |
| Flavor evaluation | 3.9 | 3.6 | 3.4 | 2 | 2.4 |
| Flavor evaluation (comments) | Good | Good | Rather strong salty taste | Watery | Flavor different from milk |

As shown in Table 11, Comparative Examples 7 and 8, which did not use a marine-derived potassium salt, had a weak milk flavor and was either watery or had a flavor different in nature from milk. In contrast, the cow milk-like beverages of the respective Examples, which satisfied (1) to (4), were able to offer a flavor close to milk.

### {Examples 14 to 17, and Comparative Examples 9 and 10}

90.76 parts by mass of water was heated up to 60°C, and while stirring, 0.05 parts by mass of α-amylase "BAN 480L" (from Novozymes), 0.1 parts by mass of glucoamylase "Amylase AG" (from Novozymes), and 8.0 parts by mass of oat powder (from Glanbia pic; oil component content: 3.0 mass%; protein content: 11.9 mass%; potassium content: 0.330 mass%; sodium content: 0.008 mass%) were added, and the mixture was retained for 3 hours, to cause an enzymatic reaction. Then, the mixture was subjected to a deactivation treatment at 90°C for 15 minutes, and then cooled to 5°C, to prepare an oat saccharified product. Then, 1 part by mass of sunflower oil and 0.09 parts by mass of table salt were mixed thereto and emulsified, to prepare a preliminary emulsion. The preliminary emulsion was homogenized under a pressure of 3 MPa, then sterilized with a VTIS sterilizer (UHT sterilizer from Alfa Laval) at 140°C for 4 seconds, again homogenized under a pressure of 5 MPa, and then cooled to 5°C, to obtain oat milk.

The aforementioned oat milk (oil component content: 1.24 mass%; protein content: 0.95 mass%; potassium content: 0.026 mass%; sodium content: 0.036 mass%) and the aforementioned Concentrated milk-flavor liquids A to C were mixed according to the ratio shown in Table 12 below, to obtain Oil-in-water emulsions 22 to 27 which were cow milk-like beverages.

For each of the obtained Oil-in-water emulsions 22 to 27, (1) the protein content, (2) the marine-derived potassium salt content, (3) the mass ratio between sodium and potassium, (4) the oil component content, and (5) the non-fat milk solids content are shown in Table 13.

**[Table 12]**

| (Parts by mass) | Example 14 | Example 15 | Example 16 | Example 17 | Comparative Example 9 | Comparative Example 10 |
|---|---|---|---|---|---|---|
| Oil-in-water emulsion | 22 | 23 | 24 | 25 | 26 | 27 |
| Oat milk | 92 | 95 | 98 | 96 | 92 | 100 |
| Concentrated milk-flavor liquid A | 8 | 5 | 2 | 0 | 0 | 0 |
| Concentrated milk-flavor liquid B | 0 | 0 | 0 | 4 | 0 | 0 |
| Concentrated milk-flavor liquid C | 0 | 0 | 0 | 0 | 8 | 0 |

**[Table 13]**

| **Cow milk-like beverage** | | | | | | |
|---|---|---|---|---|---|---|
| | Example 14 | Example 15 | Example 16 | Example 17 | Comparative Example 9 | Comparative Example 10 |
| Oil-in-water emulsion | 22 | 23 | 24 | 25 | 26 | 27 |
| (1) Protein content (mass%) | 0.87 | 0.9 | 0.93 | 0.91 | 0.87 | 0.95 |
| (2) Marine-derived potassium salt content (mass%) | 0.184 | 0.115 | 0.046 | 0.122 | 0 | 0 |
| (3) Mass ratio between sodium and potassium (K/Na) | 3.62 | 2.48 | 1.4 | 1.62 | 0.72 | 0.72 |
| (4) Oil component content (mass%) | 1.16 | 1.19 | 1.22 | 1.2 | 1.16 | 1.24 |
| (5) Non-fat milk solids (mass%) | 0 | 0 | 0 | 0 | 0 | 0 |
| Potassium content (mass%) | 0.12 | 0.085 | 0.049 | 0.071 | 0.024 | 0.026 |

Ten expert panelists evaluated the flavor of each of the obtained Oil-in-water emulsions 22 to 27, which were cow milk-like beverages. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 14. In cases where comments were made during the evaluation, comments that were raised a plurality of times are also shown in Table 14.

**[Table 14]**

| **Cow milk-like beverage** | | | | | | |
|---|---|---|---|---|---|---|
| | Example 14 | Example 15 | Example 16 | Example 17 | Comparative Example 9 | Comparative Example 10 |
| Oil-in-water emulsion | 22 | 23 | 24 | 25 | 26 | 27 |
| Flavor evaluation | 4 | 4.8 | 4.3 | 4.4 | 2.7 | 2.2 |
| Flavor evaluation (comments) | Slightly strong salty taste | Good | Somewhat weak milk flavor | Somewhat weak milk flavor | Weak milk flavor | Peculiar cereal smell |

As shown in Table 14, Comparative Examples 9 and 10, which used oat milk but did not use a marine-derived potassium salt, had a weak milk flavor and a peculiar cereal smell, whereas the cow milk-like beverages of the respective Examples, which satisfied (1) to (4), were able to offer a flavor equivalent to or similar to milk.

### {Examples 18 to 20, and Comparative Examples 11 and 12}

A plant-based milk ( "Bridge Rice Drink (Original)" from The Bridge; oil component content: 1.4 mass%; protein content: 0.5 mass%; potassium content: 0.01 mass%; sodium content: 0.04 mass%; moisture content: 85.1 mass%), the aforementioned Potassium chloride solutions A, B, and water were mixed according to the ratio shown in Table 15 below, to obtain Oil-in-water emulsions 28 to 32 which were cow milk-like beverages.

For each of the obtained Oil-in-water emulsions 28 to 32, (1) the protein content, (2) the marine-derived potassium salt content, (3) the mass ratio between sodium and potassium, (4) the oil component content, and (5) the non-fat milk solids content are shown in Table 16.

**[Table 15]**

| (Parts by mass) | Example 18 | Example 19 | Example 20 | Comparative Example 11 | Comparative Example 12 |
|---|---|---|---|---|---|
| Oil-in-water emulsion | 28 | 29 | 30 | 31 | 32 |
| Rice milk | 92 | 96 | 87 | 88 | 100 |
| Potassium chloride solution A | 8 | 4 | 0 | 0 | 0 |
| Potassium chloride solution B | 0 | 0 | 13 | 0 | 0 |
| Water | 0 | 0 | 0 | 12 | 0 |

**[Table 16]**

| **Cow milk-like beverage** | | | | | |
|---|---|---|---|---|---|
| | Example 18 | Example 19 | Example 20 | Comparative Example 11 | Comparative Example 12 |
| Oil-in-water emulsion | 28 | 29 | 30 | 31 | 32 |
| (1) Protein content (mass%) | 0.46 | 0.48 | 0.435 | 0.44 | 0.5 |
| (2) Marine-derived potassium salt content (mass%) | 0.18 | 0.09 | 0.40 | 0 | 0 |
| (3) Mass ratio between sodium and potassium (K/Na) | 2.86 | 1.50 | 2.42 | 0.25 | 0.25 |
| (4) Oil component content (mass%) | 1.29 | 1.34 | 1.22 | 1.23 | 1.40 |
| (5) Non-fat milk solids (mass%) | 0 | 0 | 0 | 0 | 0 |
| Potassium content (mass%) | 0.105 | 0.058 | 0.160 | 0.009 | 0.010 |

Ten expert panelists evaluated the flavor of each of the obtained Oil-in-water emulsions 28 to 32, which were cow milk-like beverages. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 17. In cases where comments were made during the evaluation, comments that were raised a plurality of times are also shown in Table 17.

**[Table 17]**

| **Cow milk-like beverage** | | | | | |
|---|---|---|---|---|---|
| | Example 18 | Example 19 | Example 20 | Comparative Example 11 | Comparative Example 12 |
| Oil-in-water emulsion | 28 | 29 | 30 | 31 | 32 |
| Flavor evaluation | 3.8 | 3.5 | 3.2 | 2 | 2.4 |
| Flavor evaluation (comments) | Good | Good | Rather strong salty taste | Watery | Flavor different from milk |

As shown in Table 17, Comparative Examples 11 and 12, which did not use a marine-derived potassium salt, had a weak milk flavor and was either watery or had a flavor different in nature from milk. In contrast, the cow milk-like beverages of the respective Examples, which satisfied (1) to (4), were able to offer a flavor close to milk.

### {Examples 21 and 22, and Comparative Example 13}

### {Example 21}

Sodium methylate was added as a catalyst to an oil mixture obtained by mixing 55 parts by mass of fully hydrogenated palm oil (iodine value: 1) and 45 parts by mass of palm kernel oil, and a non-selective interesterification reaction was conducted. Then, decolorization (3% white clay; 85°C; under reduced pressure of 0.93 kPa or less) and deodorization (250°C; 60 minutes; water vapor blow-in amount: 5%; under reduced pressure of 0.4 kPa or less), to obtain Interesterified fat A'.

33 parts by mass of palm kernel oil, 3 parts by mass of Interesterified fat A', and 6 parts by mass of palm mid fraction were mixed and heated to 65°C to dissolve, and then 0.2 parts by mass of soybean lecithin, 0.1 parts by mass of sorbitan fatty acid ester, and 0.1 parts by mass of glycerol fatty acid ester (HLB: 4) were further added, to obtain an oil phase. On the other hand, 0.2 parts by mass of sucrose fatty acid ester (HLB: 16), 4 parts by mass of skimmed milk powder (oil component content: 1.0 mass%; protein content: 34.0 mass%; potassium content: 1.80 mass%; sodium content: 0.57 mass%), 0.5 parts by mass of sodium caseinate (oil component content: 0.7 mass%; protein content: 91.3 mass%; potassium content: 0.003 mass%; sodium content: 1.30 mass%), 0.03 parts by mass of table salt, 0.12 parts by mass of a marine-derived potassium salt ("Ocean Kali" from FC Chemical Co., Ltd.; protein content: 0 mass%; potassium content: 52.2 mass%; sodium content: 0 mass%), and 52.75 parts by mass of water were mixed and heated to 65°C to dissolve, to obtain a water phase. The oil phase and the water phase were mixed and emulsified, to prepare a preliminary emulsion. This was homogenized under a pressure of 3 MPa, then sterilized with a VTIS sterilizer (UHT sterilizer from Alfa Laval) at 140°C for 4 seconds, again homogenized under a pressure of 5 MPa, and then cooled to 5°C. Thereafter, aging was conducted in a refrigerator for 24 hours, to obtain Oil-in-water emulsion 33 of the present invention, which was a foamable oil-in-water emulsion.

For the obtained Oil-in-water emulsion 33, (1) the protein content, (2) the marine-derived potassium salt content, (3) the mass ratio between sodium and potassium, (4) the oil component content, and (5) the non-fat milk solids content are shown in Table 18.

### {Example 22}

Instead of the table salt and the marine-derived potassium salt ("Ocean Kali") used in Example 21, 0.15 parts by mass of a marine-derived potassium salt ("Kali Base" from FC Chemical Co., Ltd.; protein content: 0 mass%; potassium content: 37.8 mass%; sodium content: 7.9 mass%) was used. Other than the above, Oil-in-water emulsion 34 of the present invention, which was a foamable oil-in-water emulsion, was obtained according to the blend and production method of Example 21.

For the obtained Oil-in-water emulsion 34, (1) the protein content, (2) the marine-derived potassium salt content, (3) the mass ratio between sodium and potassium, (4) the oil component content, and (5) the non-fat milk solids content are shown in Table 18.

### {Comparative Example 13}

Instead of the marine-derived potassium salt ("Ocean Kali") used in Example 21, potassium chloride (mineral-derived "Sylvine" from Organo Foodtech Corporation; protein content: 0 mass%; potassium content: 52.0 mass%; sodium content: 0 mass%) was used. Other than the above, Oil-in-water emulsion 35 as a comparative example, which was a foamable oil-in-water emulsion, was obtained according to the blend and production method of Example 18.

For the obtained Oil-in-water emulsion 30, (1) the protein content, (2) the marine-derived potassium salt content, (3) the mass ratio between sodium and potassium, (4) the oil component content, and (5) the non-fat milk solids content are shown in Table 18.

**[Table 18]**

| **Foamable oil-in-water type emulsion** | | | |
|---|---|---|---|
| | Example 21 | Example 22 | Comparative Example 13 |
| Oil-in-water emulsion | 33 | 34 | 35 |
| (1) Protein content (mass%) | 1.82 | 1.82 | 1.82 |
| (2) Marine-derived potassium salt content (mass%) | 0.12 | 0.15 | 0 |
| (3) Mass ratio between sodium and potassium (KINa) | 3.27 | 3.13 | 3.27 |
| (4) Oil component content (mass%) | 42.5 | 42.5 | 42.5 |
| (5) Non-fat milk solids (mass%) | 4.3 | 4.3 | 4.3 |
| Potassium content (mass%) | 0.135 | 0.129 | 0.134 |

Each of the obtained Oil-in-water emulsions 23 to 35 was placed in a mixer bowl, and was whipped and foamed with a vertical mixer at a rotation speed of 700 rpm until it reached an optimally foamed state, to thereby obtain whipped cream.

Ten expert panelists evaluated the flavor. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 19.

**[Table 19]**

| **Foamable oil-in-water type emulsion** | | | |
|---|---|---|---|
| | Example 21 | Example 22 | Comparative Example 13 |
| Oil-in-water emulsion | 33 | 34 | 35 |
| Flavor evaluation | 3.8 | 3.7 | 2.2 |
| Flavor evaluation (comments) | Lingering flavor like milk | Mellow milk flavor | Sharp salty taste; acrid |

As shown in Table 19, the whipped cream of the respective Examples, which satisfied (1) to (4), was able to offer a flavor closer to milk, compared to Comparative Example 13, which used a milk protein but used a mineral-derived potassium salt instead of a marine-derived potassium salt.

### {Examples 23 and 24, and Comparative Example 14}

### {Example 23}

25 parts by mass of palm kernel oil, 2 parts by mass of the aforementioned Interesterified fat A', and 3 parts by mass of palm mid fraction were mixed and heated to 65°C to dissolve, and then 0.2 parts by mass of soybean lecithin and 0.1 parts by mass of glycerol fatty acid ester (HLB: 4) were further added, to obtain an oil phase. On the other hand, 0.2 parts by mass of sucrose fatty acid ester (HLB: 11), 2 parts by mass of a plant-derived protein material (soy protein isolate "Fujipro F" from Fuji Oil Co., Ltd.; oil component content: 0.2 mass%; protein content: 85.8 mass%; potassium content: 0.2 mass%; sodium content: 1.2 mass%), 0.02 parts by mass of table salt, 0.15 parts by mass of a marine-derived potassium salt ("Ocean Kali" from FC Chemical Co., Ltd.; protein content: 0 mass%; potassium content: 52.2 mass%), 0.25 parts by mass of guar gum, 0.05 parts by mass of xanthan gum, 2.4 parts by mass of syrup ("MT500" from Showa Sangyo Co., Ltd.; sugar solids content: 70 mass%), and 64.63 parts by mass of water were mixed and heated to 65°C to dissolve, to obtain a water phase. The oil phase and the water phase were mixed and emulsified, to prepare a preliminary emulsion. This was homogenized under a pressure of 3 MPa, then sterilized with a VTIS sterilizer (UHT sterilizer from Alfa Laval) at 140°C for 4 seconds, again homogenized under a pressure of 5 MPa, and then cooled to 5°C. Thereafter, aging was conducted in a refrigerator for 24 hours, to obtain Oil-in-water emulsion 36 of the present invention, which was a foamable oil-in-water emulsion.

For the obtained Oil-in-water emulsion 36, (1) the protein content, (2) the marine-derived potassium salt content, (3) the mass ratio between sodium and potassium, (4) the oil component content, and (5) the non-fat milk solids content are shown in Table 20.

### {Example 24}

Instead of the table salt and the marine-derived potassium salt ("Ocean Kali") used in Example 23, 0.3 parts by mass of a marine-derived potassium salt ("Kali Base" from FC Chemical Co., Ltd.; protein content: 0 mass%; potassium content: 37.8 mass%; sodium content: 7.9 mass%) was used, and the water blending amount was changed from 64.63 parts by mass to 64.5 parts by mass. Other than the above, Oil-in-water emulsion 37 of the present invention, which was a foamable oil-in-water emulsion, was obtained according to the blend and production method of Example 23.

For the obtained Oil-in-water emulsion 32, (1) the protein content, (2) the marine-derived potassium salt content, (3) the mass ratio between sodium and potassium, (4) the oil component content, and (5) the non-fat milk solids content are shown in Table 19.

### {Comparative Example 14}

Instead of the marine-derived potassium salt ("Ocean Kali") used in Example 23, potassium chloride (mineral-derived "Sylvine" from Organo Foodtech Corporation; protein content: 0 mass%; potassium content: 52.0 mass%; sodium content: 0 mass%) was used. Other than the above, Oil-in-water emulsion 38 as a comparative example, which was a foamable oil-in-water emulsion, was obtained according to the blend and production method of Example 23.

For the obtained Oil-in-water emulsion 38, (1) the protein content, (2) the marine-derived potassium salt content, (3) the mass ratio between sodium and potassium, (4) the oil component content, and (5) the non-fat milk solids content are shown in Table 20.

**[Table 20]**

| **Foamable oil-in-water type emulsion** | | | |
|---|---|---|---|
| | Example 23 | Example 24 | Comparative Example 14 |
| Oil-in-water emulsion | 36 | 37 | 38 |
| (1) Protein content (mass%) | 1.72 | 1.72 | 1.72 |
| (2) Marine-derived potassium salt content (mass%) | 0.15 | 0.3 | 0 |
| (3) Mass ratio between sodium and potassium (K/Na) | 2.58 | 2.46 | 2.57 |
| (4) Oil component content (mass%) | 30 | 30 | 30 |
| (5) Non-fat milk solids (mass%) | 0 | 0 | 0 |
| Potassium content (mass%) | 0.082 | 0.117 | 0.082 |

Each of the obtained Oil-in-water emulsions 36 to 38 was placed in a mixer bowl, and was whipped and foamed with a vertical mixer at a rotation speed of 700 rpm until it reached an optimally foamed state, to thereby obtain whipped cream.

Ten expert panelists evaluated the flavor. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 21.

**[Table 21]**

| **Foamable oil-in-water type emulsion** | | | |
|---|---|---|---|
| | Example 23 | Example 24 | Comparative Example 14 |
| Oil-in-water type emulsion | 36 | 37 | 38 |
| Flavor evaluation | 3.9 | 3.5 | 2.7 |
| Flavor evaluation (comments) | Lingering flavor like milk | Mellow milk flavor | Sharp salty taste; acrid |

As shown in Table 21, the whipped cream of the respective Examples, which satisfied (1) to (4), was able to offer a flavor even closer to milk, compared to Comparative Example 14, which used a plant-based protein without using a milk protein and which used a mineral-derived potassium salt instead of a marine-derived potassium salt.

### {Example 25 and Comparative Example 15}

### {Example 25}

72.49 parts by mass of water was heated up to 60°C, and while stirring, 0.05 parts by mass of α-amylase "BAN 480L" (from Novozymes), 0.1 parts by mass of glucoamylase "Amylase AG" (from Novozymes), and 24.0 parts by mass of oat powder (from Glanbia pic; oil component content: 3.0 mass%; protein content: 11.9 mass%; potassium content: 0.330 mass%; sodium content: 0.008 mass%) were added, and the mixture was subjected to an enzymatic reaction until the saccharification degree was 80%. Then, the mixture was subjected to a deactivation treatment at 90°C for 15 minutes, and then cooled to 5°C, to prepare an oat saccharified product. To this product, 3 parts by mass of sunflower oil, 0.22 parts by mass of a marine-derived potassium salt ("Ocean Kali" from FC Chemical Co., Ltd.; protein content: 0 mass%; potassium content: 52.2 mass%), and 0.14 parts by mass of table salt were mixed and emulsified, to prepare a preliminary emulsion. This was homogenized under a pressure of 3 MPa, then sterilized with a VTIS sterilizer (UHT sterilizer from Alfa Laval) at 140°C for 4 seconds, again homogenized under a pressure of 5 MPa, and then cooled to 5°C, to obtain Oil-in-water emulsion 39 of the present invention, which was a concentrated cow milk-like composition.

For the obtained Oil-in-water emulsion 39, (1) the protein content, (2) the marine-derived potassium salt content, (3) the mass ratio between sodium and potassium, (4) the oil component content, and (5) the non-fat milk solids content are shown in Table 22.

### {Comparative Example 15}

Instead of the marine-derived potassium salt ("Ocean Kali") used in Example 25, potassium chloride (mineral-derived "Sylvine" from Organo Foodtech Corporation; protein content: 0 mass%; potassium content: 52.0 mass%; sodium content: 0 mass%) was used. Other than the above, Oil-in-water emulsion 40 as a comparative example, which was a concentrated cow milk-like composition, was obtained according to the blend and production method of Example 25.

For the obtained Oil-in-water emulsion 40, (1) the protein content, (2) the marine-derived potassium salt content, (3) the mass ratio between sodium and potassium, (4) the oil component content, and (5) the non-fat milk solids content are shown in Table 22.

**[Table 22]**

| **Concentrated cow milk-like composition** | | |
|---|---|---|
| | Example 25 | Comparative Example 15 |
| Oil-in-water emulsion | 39 | 40 |
| (1) Protein content (mass%) | 2.856 | 2.856 |
| (2) Marine-derived potassium salt content (mass%) | 0.22 | 0 |
| (3) Mass ratio between sodium and potassium (K/Na) | 3.41 | 3.4 |
| (4) Oil component content (mass%) | 3.72 | 3.72 |
| (5) Non-fat milk solids (mass%) | 0 | 0 |
| Potassium content (mass%) | 0.194 | 0.194 |

Ten expert panelists evaluated the flavor of Oil-in-water emulsions 39 and 40, which were the obtained concentrated cow milk-like compositions. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 23. In cases where comments were made during the evaluation, comments that were raised a plurality of times are also shown in Table 23.

**[Table 23]**

| **Concentrated cow milk-like composition** | | |
|---|---|---|
| | Example 25 | Comparative Example 15 |
| Oil-in-water emulsion | 39 | 40 |
| Flavor evaluation | 3.7 | 2.7 |
| Flavor evaluation (comments) | Good | Flavor somewhat different from milk |

As shown in Table 23, Comparative Example 15, which did not use a marine-derived potassium salt, had a weak milk flavor and a peculiar cereal smell was perceived, whereas the concentrated cow milk-like composition of Example 25, which satisfied (1) to (4), was able to offer a flavor similar to milk.

### {Example 26 and Comparative Example 16}

### {Example 26}

78.02 parts by mass of water was heated up to 60°C, and while stirring, 0.1 parts by mass of α-amylase "BAN 480L" (from Novozymes) and 20.0 parts by mass of rice flour (from Namisato Corporation; oil component content: 1.0 mass%; protein content: 6.5 mass%; potassium content: 0.094 mass%; sodium content: 0.001 mass%) were added, and the mixture was subjected to an enzymatic reaction until the saccharification degree was 40%. Then, the mixture was subjected to a deactivation treatment at 90°C for 15 minutes, and then cooled to 5°C, to prepare a rice saccharified product. To this product, 1.5 parts by mass of rice bran oil, 0.26 parts by mass of a marine-derived potassium salt ("Ocean Kali" from FC Chemical Co., Ltd.; protein content: 0 mass%; potassium content: 52.2 mass%), and 0.12 parts by mass of table salt were mixed and emulsified, to prepare a preliminary emulsion. This was homogenized under a pressure of 3 MPa, then sterilized with a VTIS sterilizer (UHT sterilizer from Alfa Laval) at 140°C for 4 seconds, again homogenized under a pressure of 5 MPa, and was then cooled to 5°C, to obtain Oil-in-water emulsion 41 of the present invention which was a concentrated cow milk-like composition.

For the obtained Oil-in-water emulsion 41, (1) the protein content, (2) the marine-derived potassium salt content, (3) the mass ratio between sodium and potassium, (4) the oil component content, and (5) the non-fat milk solids content are shown in Table 24.

### {Comparative Example 16}

Instead of the marine-derived potassium salt ("Ocean Kali") used in Example 26, potassium chloride (mineral-derived "Sylvine" from Organo Foodtech Corporation; protein content: 0 mass%; potassium content: 52.0 mass%; sodium content: 0 mass%) was used. Other than the above, Oil-in-water emulsion 42 as a comparative example, which was a concentrated cow milk-like composition, was obtained according to the blend and production method of Example 26.

For the obtained Oil-in-water emulsion 42, (1) the protein content, (2) the marine-derived potassium salt content, (3) the mass ratio between sodium and potassium, (4) the oil component content, and (5) the non-fat milk solids content are shown in Table 24.

**[Table 24]**

| **Concentrated cow milk-like composition** | | |
|---|---|---|
| | Example 26 | Comparative Example 16 |
| Oil-in-water emulsion | 41 | 42 |
| (1) Protein content (mass%) | 1.3 | 1.3 |
| (2) Marine-derived potassium salt content (mass%) | 0.26 | 0 |
| (3) Mass ratio between sodium and potassium (KINa) | 3.26 | 3.25 |
| (4) Oil component content (mass%) | 1.7 | 1.7 |
| (5) Non-fat milk solids (mass%) | 0 | 0 |
| Potassium content (mass%) | 0.155 | 0.154 |

Ten expert panelists evaluated the flavor of Oil-in-water emulsions 41 and 42, which were the obtained concentrated cow milk-like compositions. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 25. In cases where comments were made during the evaluation, comments that were raised a plurality of times are also shown in Table 25.

**[Table 25]**

| **Concentrated cow milk-like composition** | | |
|---|---|---|
| | Example 26 | Comparative Example 16 |
| Oil-in-water emulsion | 41 | 42 |
| Flavor evaluation | 3.8 | 2.3 |
| Flavor evaluation (comments) | Good | Weak milk flavor |

As shown in Table 25, Comparative Example 16, which did not use a marine-derived potassium salt, had a weak milk flavor, whereas the concentrated cow milk-like composition of Example 26, which satisfied (1) to (4), was able to offer a flavor similar to milk.

### {Example 27 and Comparative Example 17}

### {Example 27}

To 46.15 parts by mass of a plant-based milk (oat milk from Kohsei Industrial Co., Ltd.; oil component content: 1.3 mass%; protein content: 4.9 mass%; potassium content: 0.151 mass%; sodium content: 0.05 mass%; moisture content: 60 mass%), 45 parts by mass of refined sugar, 8.0 parts by mass of sunflower oil, 0.50 parts by mass of a marine-derived potassium salt ("Ocean Kali" from FC Chemical Co., Ltd.; protein content: 0 mass%; potassium content: 52.2 mass%), 0.25 parts by mass of table salt, and 0.1 parts by mass of xanthan gum were mixed and emulsified, to prepare a preliminary emulsion. This was homogenized under a pressure of 3 MPa, then sterilized with a VTIS sterilizer (UHT sterilizer from Alfa Laval) at 140°C for 4 seconds, again homogenized under a pressure of 5 MPa, and was then cooled to 5°C, to obtain Oil-in-water emulsion 43 of the present invention which was a sweetened condensed milk-like composition.

For the obtained Oil-in-water emulsion 43, (1) the protein content, (2) the marine-derived potassium salt content, (3) the mass ratio between sodium and potassium, (4) the oil component content, and (5) the non-fat milk solids content are shown in Table 26.

### {Comparative Example 17}

Instead of the marine-derived potassium salt ("Ocean Kali") used in Example 27, potassium chloride (mineral-derived "Sylvine" from Organo Foodtech Corporation; protein content: 0 mass%; potassium content: 52.0 mass%; sodium content: 0 mass%) was used. Other than the above, Oil-in-water emulsion 44 as a comparative example, which was a sweetened condensed milk-like composition, was obtained according to the blend and production method of Example 27.

For the obtained Oil-in-water emulsion 44, (1) the protein content, (2) the marine-derived potassium salt content, (3) the mass ratio between sodium and potassium, (4) the oil component content, and (5) the non-fat milk solids content are shown in Table 26.

**[Table 26]**

| **Sweetened condensed milk-like composition** | | |
|---|---|---|
| | Example 27 | Comparative Example 17 |
| Oil-in-water emulsion | 43 | 44 |
| (1) Protein content (mass%) | 2.3 | 2.3 |
| (2) Marine-derived potassium salt content (mass%) | 0.5 | 0 |
| (3) Mass ratio between sodium and potassium (K/Na) | 2.72 | 2.72 |
| (4) Oil component content (mass%) | 8.6 | 8.6 |
| (5) Non-fat milk solids (mass%) | 0 | 0 |
| Potassium content (mass%) | 0.331 | 0.330 |

Ten expert panelists evaluated the flavor of Oil-in-water emulsions 43 and 44, which were the obtained sweetened condensed milk-like compositions. Flavor evaluation was conducted on a five-point scale, wherein: 1 indicates "Different in nature from milk"; 2 indicates "Milk flavor is slightly perceived"; 3 indicates "Rather similar to milk"; 4 indicates "Similar to milk"; and 5 indicates "Natural flavor equivalent to milk". The average value of the evaluation results of the ten expert panelists is shown in Table 27. In cases where comments were made during the evaluation, comments that were raised a plurality of times are also shown in Table 27.

**[Table 27]**

| **Sweetened condensed milk-like composition** | | |
|---|---|---|
| | Example 27 | Comparative Example 17 |
| Oil-in-water emulsion | 43 | 44 |
| Flavor evaluation | 3.7 | 2.1 |
| Flavor evaluation (comments) | Good | Weak milk flavor; somewhat cereallike |

As shown in Table 27, Comparative Example 17, which did not use a marine-derived potassium salt, had a weak milk flavor and a peculiar cereal smell was perceived, whereas the sweetened condensed milk-like composition of Example 27, which satisfied (1) to (4), was able to offer a flavor similar to milk.

## Claims

1. An oil-in-water emulsion satisfying all of (1), (2), (3), and (4) below:
(1) having a protein content of from 0.1 to 10 mass%;
(2) containing a marine-derived potassium salt;
(3) having a mass ratio between sodium and potassium (Na:K) of from 1:0.5 to 1:10; and
(4) having an oil component content of from 0.3 to 49 mass%.

2. The oil-in-water emulsion according to claim 1, further satisfying (5) below:
(5) having a non-fat milk solids content of less than 3 mass%.

3. The oil-in-water emulsion according to claim 1 or 2, wherein the oil-in-water emulsion contains a plant-based milk or a plant-derived protein material.

4. The oil-in-water emulsion according to claim 3, wherein the oil-in-water emulsion contains a plant-based milk.

5. The oil-in-water emulsion according to claim 4, wherein the plant-based milk is derived from oat.

6. The oil-in-water emulsion according to claim 1 or 2, wherein plant-derived protein accounts for 90 mass% or more of proteins in the oil-in-water emulsion.

7. The oil-in-water emulsion according to claim 1 or 2, wherein the oil-in-water emulsion is at least one selected from the group consisting of plant-based milk-containing beverages, coffee whitener, foamable oil-in-water emulsions, alternatives to concentrated milk or concentrated cow milk-like compositions, and alternatives to sweetened condensed milk.

8. A method for imparting milk flavor to an oil-in-water emulsion or for improving milk flavor of an oil-in-water emulsion,
the method comprising:
making the oil-in-water emulsion contain a marine-derived potassium salt such that a mass ratio between sodium and potassium is from 1:0.5 to 1:10.
